# EUROPÄISCHE PATENTSCHRIFT

(11) **EP 1 926 686 B1**
(45) Veröffentlichungstag und Bekanntmachung des Hinweises auf die Patenterteilung: **11.03.2009**
(21) Anmeldenummer: 06792037.1
(22) Anmeldetag: 13.09.2006
(51) Int. Cl.: C01F 7/02, C04B 35/111

(54) **KUGELFÖRMIGE KORUNDKÖRNER AUF BASIS VON GESCHMOLZENEN ALUMINIUMOXID SOWIE EIN VERFAHREN ZU IHRER HERSTELLUNG**
SPHERICAL CORUNDUM PARTICLES, BASED ON FUSED ALUMINIUM OXIDE AND A METHOD FOR PRODUCING SAID PARTICLES
GRAINS DE CORINDON SPHERIQUES A BASE D'OXYDE D'ALUMINIUM FONDU, ET LEUR PROCEDE DE PRODUCTION

(30) Priorität: 21.09.2005 DE 102005045180
(43) Veröffentlichungstag der Anmeldung: 04.06.2008
(73) Patentinhaber: Center for Abrasives and Refractories Research & Development C.A.R.R.D. GmbH, 9524 Villach (AT)
(72) Erfinder: ALARY, Jean-André, F-84800 L'Isle sur la Sorgue (FR); SACHSE, Sebastian, A-9500 Villach (AT)
(74) Vertreter: Patentanwälte Westphal, Mussgnug & Partner
(86) Internationale Anmeldenummer: PCT/EP2006/008918
(87) Internationale Veröffentlichungsnummer: WO 2007/033787

(56) Entgegenhaltungen:
- FR-A1- 2 789 688
- US-A- 1 871 792
- US-A- 2 340 194
- US-A- 4 952 389

## Beschreibung

Die vorliegende Erfindung bezieht sich auf kugelförmige Korundkörner auf Basis von geschmolzenem Aluminiumoxid, die einen Kugeldurchmesser zwischen 0,001 und 5 mm, einen maximalen Gehalt an Natriumoxid von 0,5 Gew.% und einen maximalen Gehalt an Titanoxid von 0,5 Gew.% aufweisen, sowie auf ein Verfahren zu ihrer Herstellung.

Kugelkorund ist schon seit etwa 75 Jahren bekannt und wird großtechnisch seit etwa 30 Jahren hergestellt. So beschreiben die US 1,871,792 und die US 1,871,793 das Verblasen eines Gießstrahls von flüssigem Korund unter reduzierenden Bedingungen mittels Pressluft oder Dampf. Dabei entstehen Korundhohlkugeln mit einem Durchmesser von ca. 0 bis 5 mm. In den oben genannten US-Schriften werden bereits alle wesentlichen Schritte des noch heute angewendeten Herstellungsverfahrens beschrieben.

Verwendet wird der Hohlkugelkorund überwiegend als feuerfester Stoff, da er aufgrund der in den Kugeln eingeschlossenen Lufträumen eine sehr geringe Wärmeleitfähigkeit aufweist. Eine weitere Anwendung findet der Hohlkugelkorund als Filtermedium für heiße und chemisch aggressive Gase und Flüssigkeiten.

Von technischem Interesse sind neben Hohlkugeln jedoch auch dichtere Kugeln, die eine hohe mechanische Widerstandsfähigkeit gegen Druck, Stoß und Abrieb besitzen.

Die physikalischen Eigenschaften des Kugelkorundes werden vor allem geprägt durch die Kugelgröße (den Kugeldurchmesser), die Wandstärke der Kugeln und die Kristallitgröße der Aluminiumoxidprimärkristalle, aus denen der Kugelkorund aufgebaut ist. Je nach Anwendung werden recht unterschiedliche Anforderungen an die Eigenschaften des Kugelkorundes gestellt. So sind in der Vergangenheit zahlreiche Versuche beschrieben worden, die Eigenschaften des Kugelkorundes durch Variation des eingesetzten Rohstoffes, Zusätze in der Schmelze oder aber durch verfahrenstechnische Abwandlung beim Abgießen (Gießmenge, Manipulation des Gießstrahls, Luft- oder Dampfdruck, Düsenform, etc.) zu beeinflussen.

Die Herstellung von kompakten Aluminiumoxidkugeln durch Verblasen wird in der US 2,261,639 beschrieben, wobei durch Zusatz von 1 bis 10% Natriumoxid in der Schmelze und anschließendes Verblasen kompakte Kugeln erhalten werden. Die US 2,340,194 beschreibt den Zusatz von 1 bis 1,5% Titanoxid in der Schmelze, der zu druckfesten Hohlkugeln mit relativ dicken Wänden führt. Die nach diesen Verfahren hergestellten Aluminiumoxidkugeln haben jedoch den Nachteil, dass sie mit Fremdionen (Natrium, Titan) verunreinigt sind. Dies kann sich besonders dann nachteilig bemerkbar machen, wenn diese Materialien als Strahlmittel eingesetzt werden sollen, da die Fremdionen zu unerwünschten Reaktionen mit der zu behandelnden Oberfläche führen können. Im Falle des Natriumoxids als Verunreinigung kommt hinzu, dass Natriumaluminate gebildet werden, deren abrasive Wirkung nur gering ist.

Die EP 1 157 077 beschreibt die Herstellung von polykristallinen Schleifkörnern, wobei der flüssige Korund abgegossen und seine Abkühlung durch Dispersion des geschmolzenen Aluminiumoxids in feine Tröpfchen unter Verwendung von Ultraschall unterstützt wird. Dabei werden dichte Teilchen mit einem mittleren Durchmesser von weniger als 1 mm erhalten. Abgesehen davon, dass die Teilchen relativ klein sind, wodurch ihr Einsatzgebiet eingeschränkt wird, ist das Verfahren relativ aufwändig und der Einsatz von Ultraschall für eine Massenproduktion nicht geeignet.

In der DE 690 05 975 T2 sind kugelförmige Aluminiumoxidteilchen beschreiben, wobei eine wässrige Aufschlämmung von feinstgemahlenem α-Aluminiumoxid und Ton durch Sprühtrocknen und anschließende Wärmebehandlung zu Agglomeraten verarbeitet wird. Diese Art der Herstellung von kugelförmigen Aluminiumoxidteilchen ist sehr aufwendig und erfordert teure Rohstoffe.

Es besteht somit weiterhin Bedarf an dichteren Aluminiumoxidkugeln, die nach einem leicht durchführbaren und wirkungsvollen Verfahren hergestellt werden können.

Die Aufgabe der Erfindung besteht somit darin, weitgehend kompakte Aluminiumoxidkugeln zur Verfügung zu stellen sowie ein Verfahren zu ihrer Herstellung, das die Nachteile des Standes der Technik nicht aufweist.

Gelöst wird diese Aufgabe durch kugelförmige Korundkörner mit dem Merkmalen des Anspruchs 1 sowie durch ein Verfahren mit den Merkmalen des Anspruchs 6. Weiterentwicklungen des Erfindungsgedankens sind Gegenstand der Unteransprüche 2 bis 5.

Überraschenderweise wurde festgestellt, dass Aluminiumoxidkugeln mit einem Durchmesser zwischen 0,001 und 5 mm, einem maximalen Anteil an Natriumoxid von 0,5 Gew.%, einem maximalen Anteil an Titanoxid von ebenfalls 0,5 Gew.%, einem Gehalt an Aluminiumoxid von mehr als 98 Gew.% mit einer Schüttdichte zwischen 1,5 kg/l und 2,5 kg/l erhalten werden können, wenn man Aluminiumoxid unter Zugabe von 0,1 bis 1 Gew.% Siliziumoxid unter oxidierenden Bedingungen im elektrischen Lichtbogenofen schmilzt und dann das geschmolzene Aluminiumoxid mit einer Gießmenge von weniger als 100 kg/min. abgießt und den Gießstrahl mit Luft bei einem Druck von 3 bis 10 bar verbläst.

Im Vergleich dazu liegt die Schüttdichte von kommerziell erhältlichen Hohlkugelkorund zwischen 0,5 und 1,2 kg/l.

Darüber hinaus wurde gefunden, dass es vorteilhaft ist, wenn beim Verblasen des flüssigen Korundes ausschließlich Luft eingesetzt und auf den Zusatz von Wasser verzichtet wird.

Der Zusatz von SiO₂ beeinflusst zunächst die Viskosität der Schmelze, wobei SiO₂ als Flussmittel dient und SiO₂ die Viskosität der Schmelze verringert. Darüber hinaus wurde festgestellt, dass auch die Farbe des Produktes durch den SiO₂-Gehalt in der Schmelze beeinflusst wird. Während Produkte mit einem SiO₂-Gehalt von 0,8 Gew.% ein rein weißes Aussehen haben, zeigen die Produkte mit einem SiO₂-Gehalt unter 0,5 Gew.% eine deutliche Gelbfärbung. Der Einfluss des SiO₂ auf die Dichte des Produktes ist weniger stark ausgeprägt und basiert wahrscheinlich lediglich darauf, dass die Pröduktionsbedingungen durch eine verbesserte Fließfähigkeit beim Zusatz von SiO₂ verbessert werden und so auch eine höhere Dichte des Produktes bei höherem SiO₂-Anteil erhalten wird.

Jedoch scheint der SiO₂-Gehalt einen relativ großen Einfluss auf die physikalischen Eigenschaften des Kugelkorunds zu haben. So werden bei einem mittleren Gehalt von 0,4% SiO₂ die höchsten Werte für die Kornbruchfestigkeit gefunden. Dies ist möglicherweise darauf zurückzuführen, dass bei einem Material, das unter diesen Bedingungen geschmolzen wurde, ein relativ hoher Anteil an Mikroporen mit einem Porenvolumen unter 3 µm, bezogen auf das Gesamtporenvolumen, gefunden wird. Dieser hohe Anteil an gleichmäßig verteilten Mikroporen bzw. der geringe Anteil an großen Poren bewirkt eine entsprechende Festigkeit des kugelförmigen Korundes, die sich zahlenmäßig mit Hilfe der Messung der Kornbruchfestigkeit ausdrücken lässt.

Im Vergleich zum kommerziellen Hohlkugelkorund, der ein relatives Volumen an Mikroporen unter 3 µm von ca. 0,5% aufweist, erreicht der erfindungsgemäße kugelförmige Korund, der mit 0,4% SiO₂ geschmolzen wurde, bei einem Gesamtporenvolumen von ca. 40% einen relativen Anteil von Mikroporen von ca. 13%. Im Rahmen der Untersuchungen wurde befunden, dass das relative Volumen an Mikroporen unter 3 µm mit der Kornbruchfestigkeit korreliert. So wird bei den Materialien mit hohem Anteil an Mikroporen bei gleichem Gesamtporenvolumen die höchste Kornbruchfestigkeit gefunden.

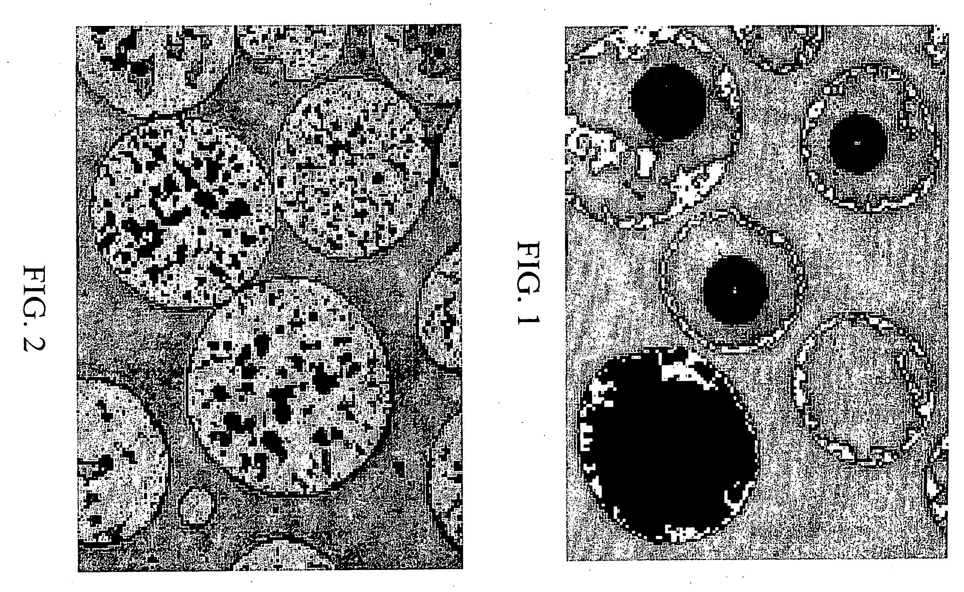

Besonders anschaulich wird der Unterschied zwischen dem kommerziell erhältlichen Hohlkugelkorund und den erfindungsgemäßen kugelförmigen Korundkörnern bei einer digitalen Bildanalyse. Die Fig. 1 zeigt das Schliffbild eines konventionellen Hohlkugelkorundes mit einem Porenvolumen von ca. 90%. Deutlich ist dabei die Dünnwandigkeit des Hohlkugelkorundes zu erkennen. Im Vergleich dazu zeigt die Fig. 2 den Anschliff eines erfindungsgemäßen kugelförmigen Korundes mit einem Porenvolumen von ca. 40%. Sehr schön ist dabei zu erkennen, dass die Poren nahezu homogen über die gesamte Kugel verteilt sind. Je nach Herstellungsbedingungen liegt das Porenvolumen für den erfindungsgemäßen kugelförmigen Korund zwischen 25 und 50%, während das Porenvolumen des konventionellen Kugelkorundes zwischen 85 und 95% liegt.

Besonders auffällig ist die geringe spezifische Oberfläche des dichten Kugelkorundes. So werden in Abhängigkeit von dem Kugeldurchmesser spezifische Oberflächen zwischen 0,005 und 0,05 m²/g gefunden. Im Vergleich dazu liegen die spezifischen Oberflächen für konventionellen Hohlkugelkorund ca. eine Zehnerpotenz höher und bewegen sich im Bereich zwischen 0,05 und 0,5 m²/g, wobei mit größer werdendem Partikeldurchmesser die spezifische Oberfläche abnimmt. Gemessen wurde die spezifische Oberfläche nach BET.

Die Abbildungen Fig. 1 und Fig. 2 verdeutlichen den Unterschied im Aufbau der erfindungsgemäßen kugelförmigen Korundkörnern und des konventionellen Kugelkorundes. Dieser Unterschied kann auch anhand von physikalischen Messmethoden dokumentiert werden. Eine besonders geeignete Methode zur Messung ist dabei die Bestimmung der Kornbruchfestigkeit nach Vollstädt. Bei diesem Verfahren handelt es sich um eine computergesteuerte Einzelkornfestigkeitsprüfung mit einer Größen- und Formanalyse der einzelnen Körner.

Die Hauptbestandteile der Apparatur sind eine pneumatische Kraftaufbringung, ein Präzisionskraftsensor, ein Schrittmotor sowie ein Spezialmikroskop mit eingebauter Kamera und Beleuchtung sowie einer zusätzlichen Beobachtungskamera. Das Funktionsprinzip der Messmethode beruht darauf, dass eine bestimmte Anzahl von Partikeln auf einen Trägerstreifen gebracht werden und dieser Trägerstreifen dann das Messgerät passiert. Dabei werden mit Hilfe des Mikroskopes Größe, Form und Positionsparameter der Partikel bestimmt, die dann zu einer genau definierten Stelle zwischen superharten Stempeln transportiert werden. Hier wirkt auf die einzelnen Körner dann eine konstant ansteigende Kraft, bis es zum Bruch der Körner kommt. Diese Bruchkraft wird erfasst und zu der Liste der bereits gemessennen Parameter für die Körner hinzugefügt.

Nach dem oben geschilderten Verfahren wurde für den konventionellen Kugelkorund in der Körnung 36 eine Kornbruchfestigkeit zwischen 1 und 5 N festgestellt, während die erfindungsgemäßen dichten Korundkörner eine Kornbruchfestigkeit von mehr als 20 N, bevorzugt mehr als 40 N, zeigten.

Im Folgenden wird die Erfindung anhand von einigen ausgesuchten Beispielen erläutert.

### Beispiel 1 - 3

Eine Mischung aus 1000 kg Tonerde und jeweils 8 kg, 4 kg bzw. 1 kg Quarzsand wurde in einem gedeckelten elektrischen Lichtbogenofen (Kippofen) mit einem Durchmesser von ca. 1.8 m, einer Leistung von 1.2 MW und einer Spannung von 172 V geschmolzen. Sobald die Mischung vollständig flüssig war, wurde der Ofen gekippt und der flüssige Korund über eine Gießschnauze abgegossen. Während des Abgießens wurde der Gießstrahl mit Hilfe einer Verblaseeinrichtung, die im Wesentlichen aus einem lanzenförmigen Rohr bestand, das an seiner Spitze mit einer Düse und zusätzlich mit einer Druckluftzufuhr versehen war, verblasen, wobei die Düse auf den Gießstrahl gerichtet, die Druckluft geöffnet und der Gießstrahl des flüssigen Korundes zerteilt wurde. Der eingesetzte Luftdruck betrug 8 bar. Die so erhaltenen Korundkugeln wurden in einer sog. Verblasekammer aufgefangen, deren Boden aus wassergekühlten Stahlplatten bestand. Von dort wurden die Kugeln mit Hilfe von Luft in eine Kühlröhre, die sich der Verblasekammer anschließt, befördert. Anschließend wurden die Korundkugeln zu einer Siebstation transportiert und entsprechend ihrem Durchmesser in einzelne Fraktionen ausgesiebt. In der folgenden Tabelle 1 sind die physikalischen Daten der so erhaltenen Korundkugeln zusammengefasst. Zum Vergleich wird ein konventioneller Hohlkugelkorund aufgeführt.

**Tabelle 1**

| | | **Vergleich** | **Beispiel 1** | **Beispiel 2** | **Beispiel 3** |
|---|---|---|---|---|---|
| **Chemische Analyse (Gew.-%)** | Al₂O₃ | 98.8 | 99.2 | 99.6 | 98.8 |
| | SiO₂ | 0.8 | 0.4 | 0.1 | 0.8 |
| | | | | | |
| **Schuttdichte (kg/l)** | 0 - 0.5 mm | 0.8 - 1.1 | 2.04 | 2.11 | 2.09 |
| | 0.5 - 1 mm | 0.65 - 0.85 | 1.86 | 1.91 | 1.95 |
| | 1 - 2 mm | 0.55 - 0.80 | 1.78 | 1.96 | 1.93 |
| | | | | | |
| **Spezifische Oberfläche (BET) (m²/g)** | 0 - 0.5 mm | 0.297 | 0.038 | 0.078 | 0.159 |
| | 0.5 - 1 mm | 0.078 | 0.020 | 0.036 | 0.024 |
| | 1 - 2 mm | 0.037 | 0.009 | 0.024 | 0.019 |
| | | | | | |
| **Kornbruchfestigkeit (Vollstädt) (N)** | | 2.5 | 40.1 | 15.8 | 33.1 |
| | | | | | |
| **Kornverteilung (%)** | 0 - 0.5 mm | 19.4 | 44.4 | 35.1 | 53.2 |
| | 0.5 - 1 mm | 27.3 | 26.6 | 30.4 | 26.9 |
| | 1 - 2 mm | 28.4 | 19.7 | 24.9 | 14.0 |
| | 2 - 5 mm | 24.9 | 9.3 | 9.6 | 5.9 |
| | | | | | |
| **Porenvolumen (%)** | | 90 | 39 | 43 | 27 |
| **Relatives Volumen an Mikroporen < 3µm (%)** | | 0.5 | 13.1 | 3.7 | 7.9 |

Wie aus den Beispielen der Tabelle 1 zu erkennen ist, beeinflusst der SiO₂-Anteil vor allem die Kornverteilung und die Kornbruchfestigkeit. Je höher der Anteil an SiO₂ ist, umso dünnflüssiger wird die Schmelze und umso feiner werden die Korundpartikel, die beim Verblasen erhalten werden. Dagegen scheinen Schüttdichte und spezifische Oberfläche relativ unabhängig vom SiO₂-Gehalt zu sein. Deutlich ist die Abhängigkeit des relativen Volumens an Mikroporen vom SiO₂-Gehalt zu sehen, wodurch offensichtlich auch die Kornbruchfestigkeit geprägt wird.

Wie aus der Tabelle 1 weiter zu erkennen ist, nimmt die Schüttdichte und die spezifische Oberfläche mit steigender Kugelgröße ab. Auffallend ist der Einfluss des SiO₂ auf die Kornverteilung.

So fällt bei einem SiO₂-Anteil von 0,8% bei der Herstellung von dichtem Kugelkorund nach dem erfindungsgemäßen Verfahren ein Anteil von mehr als 50% in der Kornfraktion 0 bis 0,5 mm an.

### Beispiel 4 (Strahltest)

Ein interessantes Einsatzgebiet für dichten Kugelkorund ist das Sandstrahlen. Um die Leistungsstärke des Kugelkorundes zu testen, wurden die Materialien aus den Beispielen 1 bis 3 mit kommerziell erhältlichen üblichen Strahlmitteln verglichen. Dabei wurden die folgenden Testbedingungen festgelegt:
Gestrahlt wurde eine Stahlplatte (Material: ST37) mit 5 kg Strahlgut unter Einsatz einer 8mm Düse bei einem Druck von 4,5 bar und einem Strahlwinkel von ca. 60° bei einer Distanz von 25 mm. Gemessen wurde der Oberflächenleistung, die Staubbildung, der Kornverschleiß, die Oberflächenrauigkeit sowie die Struktur der Oberfläche.

Die Oberflächenleistung ist charakterisiert durch die Menge an Strahlmitteln, die benötigt wird, um 1m² Stahlplatte ST37 homogen zu strahlen. Das heißt, je niedriger der Wert ist, umso weniger Strahlgut wurde verbraucht, umso höher ist die Oberflächenleistung des Strahlgutes.

Im Test wurde die Kornfraktion 0,5 bis 1 mm eingesetzt. Verglichen wurde mit den kommerziell erhältlichen Strahlkörnern ZIRBLAST^{®} (31% SiO₂ + 61% Zirkonoxid, Fraktion 425 bis 500 µm) und SOVITEC glass beads (Fraktion 425 bis 800 µm). Die Testergebnisse sind in Tabelle 2 zusammengefasst.

**Tabelle 2**

| | Beispiel 1 | ZIRBLAST^{®} | SOVITEC glass beads |
|---|---|---|---|
| Abtrag kg/m² | 22 | 17 | 22.8 |
| Staubbildung | keine | keine | geringe |
| Kornverlust | 30 | 6 | 22 |
| Oberflächenrauigkeit | 6.3 | 4.9 | 5.8 |

Die Tabelle 2 zeigt, dass die erfindungsgemäßen dichten Korund-kugeln eine den Glaskugeln vergleichbare Oberflächenleistung zeigen. Der Vorteil der erfindungsgemäßen Korundkugeln gegenüber den Glaskugeln ist darin zu sehen, dass beim Einsatz der Korundkugeln keine quarzhaltigen, gesundheitsgefährdenden Stäube anfallen. Im Vergleich zu den zirkonoxidhaltigen Kugeln zeigen die erfindungsgemäßen Korundkugeln zwar eine geringere Oberflächenleistung bei gleichzeitig deutlich größerem Verschleiß, hier besteht jedoch der Vorteil der erfindungsgemäßen Korundkugeln vor allem im deutlich niedrigeren Preis.

Ein weiterer Vorteil von dichtem Kugelkorund ist darin zu sehen, dass mit dem dichten erfindungsgemäßen Kugelkorund eine besondere Strukturierung der Oberfläche erreicht wird, die durch leichte Dellen und Kugelabdrücke gekennzeichnet ist, weshalb der Kugelkorund besonders geeignet ist für das Oberflächenfinish.

## Patentansprüche

1. Kugelförmige Korundkörner auf Basis von geschmolzenem Aluminiumoxid mit einem Kugeldurchmesser zwischen 0.001 und 5 mm, einem maximalen Gehalt an Natriumoxid von 0.5 Gew.%, einem maximalen Gehalt an Titanoxid von 0.5 Gew.% und einem Gehalt an SiO₂ zwischen 0.1 und 0.8 Gew.%,
**dadurch gekennzeichnet, dass**
sie eine Schüttdichte zwischen 1.5 kg/l und 2.5 kg/l aufweisen.

2. Kugelförmige Korundkörner nach Anspruch 1,
**dadurch gekennzeichnet, dass**
sie eine spezifische Oberfläche (BET) zwischen 0.005 und 0.05 m²/g aufweisen.

3. Kugelförmige Korundkörnern nach Anspruch 1 oder 2,
**dadurch gekennzeichnet, dass**
sie eine Kornbruchfestigkeit (Vollstädt) von ≥ 20 N, vorzugsweise ≥ 40 N, aufweisen.

4. Kugelförmige Korundkörner nach einem der Ansprüche 1 bis 3,
**dadurch gekennzeichnet, dass**
sie ein Porenvolumen, gemessen über eine digitale Bildanalyse, von weniger als 50%, bevorzugt weniger als 40%, besonders bevorzugt weniger als 30% aufweisen.

5. Kugelförmige Korundkörner nach einem der Ansprüche 1 bis 4,
**dadurch gekennzeichnet, dass**
sie ein relatives Porenvolumen an Mikroporen unter 3µm von mehr als 5%, bevorzugt mehr als 15%, bezogen auf ein Gesamtporenvolumen von 30-40% aufweisen.

6. Verfahren zur Herstellung von kugelförmigen Korundkörnern nach einem der Ansprüche 1 bis 5, wobei
a) Tonerde unter Zusatz von 0,1 bis 1%, bevorzugt 0,2 bis 0,6%, bezogen auf das Gesamtgewicht der Ausgangsstoffe, Quarzsand in elektrischen Lichtbogenofen geschmolzen wird,
b) die Schmelze mit einer Gießmenge von weniger als 100kg/min abgegossen wird und
c) der Gießstrahl mit Druckluft bei einem Druck zwischen 3 bis 10 bar verblasen wird,
**dadurch gekennzeichnet, dass**
die Schmelze unter oxidierenden Bedingungen durchgeführt wird.

## Claims

1. Spherical corundum grains based on fused aluminum oxide, having a spherical diameter between 0.001 and 5 mm, a maximum sodium oxide content of 0.5% by weight, a maximum titanium oxide content of 0.5% by weight, and a content of SiO₂ between 0.1 and 0.8% by weight,
**characterized in that**
the spherical corundum grains have a bulk density between 1.5 kg/L and 2.5 kg/L.

2. Spherical corundum grains according to Claim 1,
**characterized in that**
the spherical corundum grains have a specific surface (BET) between 0.005 and 0.05 m²/g.

3. Spherical corundum grains according to Claim 1 or 2,
**characterized in that**
the spherical corundum grains have a grain fracture strength (Vollstädt) of ≥ 20 N, preferably ≥ 40 N.

4. Spherical corundum grains according to one of Claims 1 through 3,
**characterized in that**
the spherical corundum grains have a pore volume, measured using digital image analysis, of less than 50%, preferably less than 40%, particularly preferably less than 30%.

5. Spherical corundum grains according to one of Claims 1 through 4,
**characterized in that**
for the spherical corundum grains the relative pore volume of micropores smaller than 3 µm is greater than 5%, preferably greater than 15%, relative to a total pore volume of 30-40%.

6. Method for manufacturing spherical corundum grains according to one of Claims 1 through 5, with
a) Aluminum oxide being melted in an electric arc furnace with the addition of 0.1 to 1%, preferably 0.2 to 0.6%, quartz sand relative to the total weight of the starting materials,
b) The melt being poured in a pouring quantity of less than 100 kg/min, and
c) the pouring stream being blown using compressed air at a pressure between 3 and 10 bar,
**characterized in that**
the melt is carried out under oxidizing conditions.

## Revendications

1. Grains de corindon de forme sphérique, à base d'oxyde d'aluminium fondu ayant un diamètre de bille compris entre 0,001 mm et 5 mm, une teneur pondérale maximale en oxyde de sodium de 0,5 %, une teneur pondérale maximale en oxyde de titane de 0,5 % et une teneur pondérale en SiO₂ comprises entre 0,1 % et 0,8 %,
**caractérisés par**
une densité en vrac comprise entre 1,5 kg/l et 2,5 kg/l.

2. Grains de corindon de forme sphérique selon la revendication 1,
**caractérisés par**
une surface spécifique (BET) comprise entre 0,005 m²/g et 0,05 m²/g.

3. Grains de corindon de forme sphérique selon les revendications 1 ou 2,
**caractérisés par**
une tenue à la rupture (selon Vollstädt) ≥ 20 N et, de préférence, ≥ 40 N.

4. Grains de corindon de forme sphérique selon l'une des revendications 1 à 3,
**caractérisés par**
un volume de pores mesuré par une analyse numérique d'image, inférieur à 50 %, de préférence inférieur à 40 % et notamment inférieur à 30 %.

5. Grains de corindon de forme sphérique selon l'une des revendications 1 à 4,
**caractérisés par**
un volume relatif de pores pour des micropores inférieurs à 3 µm, supérieur à 5 %, de préférence supérieur à 15 % par rapport au volume total des pores de 30 % à 40 %.

6. Procédé de fabrication de grains de corindon de forme sphérique selon l'une des revendications 1 à 5,
selon lequel
a) dans un four à arc électrique, on fait fondre de l'argile avec addition de sable de quartz de 0,0 % à 1 % et, de préférence de 0,2 % à 0,6 % du poids total des matières premières,
b) on coule le produit en fusion selon un débit de fonte inférieur à 100 Kg/min, et
c) sur le jet de coulée on souffle de l'air comprimé sous une pression comprise entre 3 bar et 10 bar,
**caractérisé en ce qu'**
on effectue la fusion dans une atmosphère oxydante.
